# EUROPEAN PATENT APPLICATION

(11) **EP 1 908 623 A1**
(43) Date of publication of application: **09.04.2008**
(21) Application number: 07101253.8
(22) Date of filing: 26.01.2007
(51) Int. Cl.: B60L 8/00, H02J 3/00

(54) **Vehicle equipped for providing solar electric power for off-vehicle use and systems in support thereof**

(30) Priority: 03.10.2006 US 543725
(71) Applicant: Plishner, Paul J., Southhampton, NY 11968 (US)
(72) Inventor: Plishner, Paul J., Southhampton, NY 11968 (US)
(74) Representative: Eisenführ, Speiser & Partner

(57) **Abstract**

A vehicle equipped to provide to a docking facility at a home or business structure, electric power derived from solar collectors formed on the surface of the vehicle, and the docking facility for receiving such power. Also provided is a system for providing to the public electric power grid such power received from a plurality of vehicles, and for compensating the owners. Corresponding methods of operation are also provided.

## Description

### FIELD OF THE INVENTION

The present invention pertains to the field of electric power generation. More particularly, the present invention concerns a vehicle equipped to provide electric power from solar collectors formed on the body of a vehicle, for use by for exa m-ple the public power grid.

### BACKGROUND OF THE INVENTION

The public electric power grid is, from time to time, unable to respond to demands for electric power. The situation is not likely to improve, on account of increasing population with attendant increase in demand. In addition, sources of electric power (power-generation facilities) traditionally relied on by the grid are at risk of attack by terrorists.

It is self-evident that having many different sources of electric power all contributing to the grid would make for a more robust grid. Ideally, in view of global warming and other environmental concerns, each source of electric power is a clean source, e.g. solar power or geothermal power or wind power. The only source of clean electric power available everywhere is solar power. Solar power collectors are being used, somewhat, to contribute power to the power grid, but the cost of solar collectors has argued against such use in other than large-scale applications in very favorable environments. With recent advances in solar collector technology, however, it is likely that it can be worthwhile, from a cost standpoint, for small-scale applications of solar collectors to contribute electric power to the grid.

What is needed is a way to make use of the recent advances in solar collector technology to provide electric power to the grid, on a small-scale individual-by-individual basis, or to at least reduce the load on the grid by providing electric power for home or business use, based on small-scale applications.

The prior art of course teaches installing solar collectors as part of a home or business and using the electric power provided by the solar collectors. The invention, however, looks to another installation of solar collectors--as part of a vehicle, and not for providing electric power to the propulsion system of the vehicle but instead for providing electric power while the car is parked, of use possibly by the grid, or by a home or business. The rationale here is that the vehicle owner can be compensated for contributing to the power grid using solar collectors that may be included with the car anyway, for providing electric power to the propulsion system when the car is in operation. As will be understood from what follows, the invention is not limited to such applications.

### SUMMARY

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

According to the invention, a vehicle includes a solar collector formed on the body of the vehicle and also includes equipment for providing electric power developed by the solar collector for off-vehicle use. This is done while the car is parked. The electric power can be provided to the power grid, or it can be used by the facility to which it is provided, e.g. a home or business. The invention makes economic sense because the vehicle owner can be compensated for providing the electric power. For example, in case of providing the electric power to a business, the business owner could compensate the vehicle owner. Even if the vehicle owner simply uses the electric power in the owner's home, for personal use, the end result is to make the power grid more robust, by reducing demand. In one embodiment of the invention, a third party keeps track of contributions of electric power by many different vehicles while each is parked at various different locations, and compensates the owners of the vehicles for their respective contributions of electric power. The locations where contributions are made includes equipment for coupling to a vehicle for receiving the electrical power, and also for receiving information needed to compensate the vehicle owner, and the vehicle includes corresponding coupling equipment.

The invention has especial merit in that cars are increasingly likely to include solar collectors even if the propulsion system is not solar-powered, and were it not for the invention, the solar energy available for collection while a car is parked might be passed up.

### BRIEF DESCRIPTION OF THE DRAWINGS

The above and other objects, features and advantages of the invention will become apparent from a consideration of the subsequent detailed description presented in connection with accompanying drawings, in which:
- Figure 1: is a block diagram of a system according to the invention, showing a vehicle including equipment for providing electric power for off-vehicle use to a docking facility located e.g. at a business having parking spaces equipped to receive the electric power, where the electric power provided by the vehicle is derived from solar energy, and also showing components of the docking facility, including components for accounting so as to credit an account associated with the vehicle.
- Figures 2A and 2B: are a top view and side view respectively of a receptacle and plug that may be used at a docking facility for coupling to a vehicle.
- Figure 3: is a block diagram/ flow diagram showing an embodiment of the invention in which a plurality of docking facilities provide electric power received from vehicles to a power grid, and a third party provides compensation to accounts associated with the vehicles.
- Figure 4: is a flow chart illustrating a method of operation of a docking facility and a third-party facility serving many docking facilities, according to the invention.

### DETAILED DESCRIPTION

According to the invention, a vehicle parked on a premises provides electric power for off-vehicle use, using solar collectors formed on the body of the vehicle. The electric power is provided to what is here called a docking facility. In a usual application of the invention, the vehicle is parked on a commercial premises, such as a sports stadium parking lot, and the docking facility is owned and/or operated by the owner and/or operator of the sports stadium parking lot, but the docking facility could also be owned and/or operated by a third party, i.e. a party other than the owner and/or operator of the parking lot. The docking facility can direct the electric power provided by the vehicle to the public electric power grid, or can direct the electric power for local use, e.g. for use by the business on whose property the docking facility is located. Thus, a vehicle according to the invention can provide clean electric power to the grid, but at any rate can provide electric power for off-vehicle use. According to the invention further, the vehicle owner is compensated for providing the electric power. The compensation is figured based on tracking (metering) the electric power provided by the vehicle. The compensation may be provided by the owner/ operator of the docking facility, or may be provided by a third party, which may be the public electric power grid entity.

According further to the invention, a vehicle is configured to communicate an account number (a number indicating what is here called a vehicle account) when it interfaces with the docking facility to provide the electric power it derives from solar energy, and metering is performed to track the power provided by the vehicle. The provider of the docking facility or a third-party may then sell the electric power to the power grid. A third party, advantageously, is configured to track the electric power provided by different vehicles at different times and at different docking stations, and to periodically compensate the vehicle accounts associated with the different vehicles. Such an arrangement minimizes the overhead needed for compensating a vehicle for the electric power it provides, in that it achieves economy of scale. The third party can be e.g. a private power marketing company, or even the public electric power grid itself.

The invention is not limited to any particular arrangement by which the electric power provided by the vehicle may or may not be used or sold after it is provided to the docking facility. The invention encompasses having the vehicle provide the electric power without compensation (e.g. in case the vehicle provides electric power to the home of the owner of the vehicle), or having the vehicle account compensated for the electric power by the business or even the homeowner (e.g. in case of a business car), or having the vehicle account compensated for the electric power by a third party, such as a power marketer or a power grid entity.

The invention is also not limited to any particular type of vehicle; the invention encompasses any vehicle having a solar collector and configured to interface with a home or business so as to provide electrical energy to the home or business. For example, the vehicle could be a conventional gasoline or ethanol-powered vehicle configured or adapted to include the equipment needed for the invention. Such a vehicle may not use any of the electric power provided by the solar collector, or it may use at least some of the electric power from time to time to charge a battery or other energy storage device (used for electrical equipment such as lights, and for electronics, and for starting the vehicle). Alternatively, the vehicle could be a vehicle that includes an electrical motor (among possibly other forms of motive force) that may itself use at least some of the electric power provided by the solar collector, at least some of the time.

Finally, the invention encompasses not only providing electric power derived from solar energy, but also electric power from infrared or other non-visible portions of the electromagnetic spectrum. So the term solar collector should be understood here as indicating not only a device for collecting energy from the sun's rays/electromagnetic radiation (both visible and invisible), but also from electromagnetic radiation not originating in the sun (including e.g. electromagnetic radiation originating in other stars). For example, the "solar collector" could derive electric power from infrared radiation emitted by any object in consequence of the object having thermal energy, i.e. having a non-zero temperature (on the absolute temperature scale).

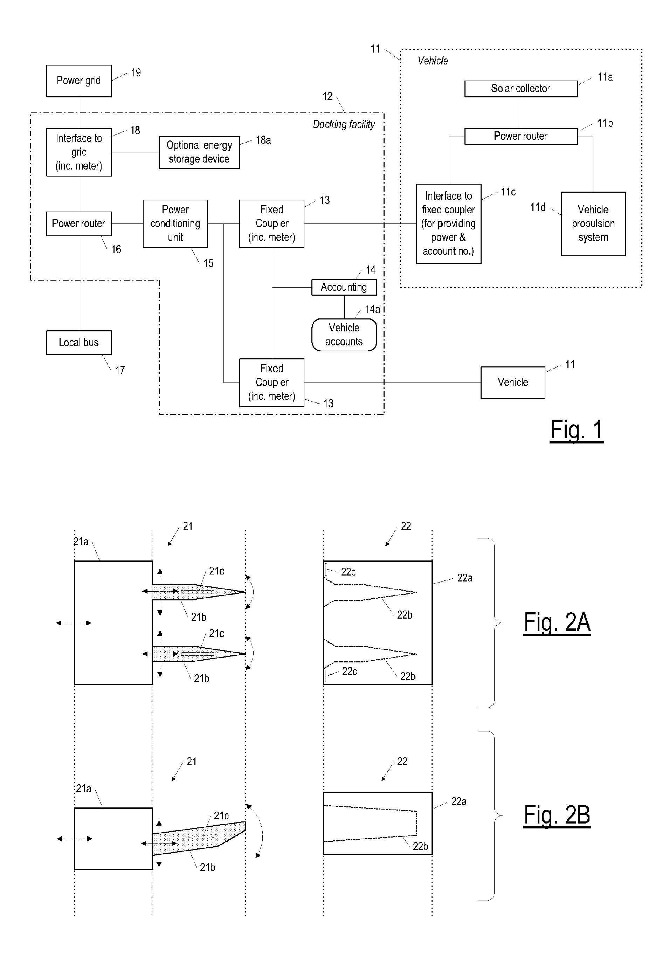

Referring now to Fig. 1, according to the invention in case of a vehicle 11 using solar power as at least one component of motive force for the vehicle propulsion system, the vehicle 11 is equipped with a solar collector 11 a that converts solar power (as that term is used here, as explained above) into electric power and provides the electric power to a power router 11 b, which in turn provides the electric power either to a vehicle propulsion system 11 d or to an interface 11 c to a fixed coupler 13, depending on whether electric power is needed by the vehicle. The fixed coupler 13 is part of a docking facility 12, provided e.g. by a business, which may be certified as a so-called qualifying facility for electric power generation (i.e. certified under the Public Utility Regulatory Policies Act of 1978 as a cogeneration facility or a small power production facility) for providing electric power to the (electric) power (distribution) grid, i.e. to a network of electric power lines and associated equipment used to transmit and distribute electricity over a geographic area. The power router 11 b in the vehicle 11 is optional, and of course would not be needed in case of a vehicle making no use internally of any of the solar-derived electric power.

The docking facility 12 includes, according to the invention, the fixed coupler 13 for receiving the electric power from the vehicle 11. The fixed coupler (or at least the docking facility generally) also includes metering functionality for keeping track of the total electrical energy provided by the vehicle, and signaling functionality for receiving from the vehicle the (vehicle) account number, indicating a vehicle account, to be associated with the vehicle for purposes of compensating the vehicle owner or account holder for the electric power provided by the vehicle. The fixed coupler 13 communicates the account number and meter readings to an accounting module 14 (which may be provided as part of the fixed coupler), which holds the meter readings or corresponding tracking information in a data store 14a of vehicle accounts (what can be called docking facility vehicle accounts, to distinguish them from third-party facility vehicle accounts introduced below), for use in compensating from time to time the account associated with the vehicle. The accounting module is provided as computer software hosted by a computer. The computer is typically situated remotely from the fixed couplers, and communicably coupled to the fixed couplers wirelessly or via a wireline connection, over the Internet or a private network.

Prefatory to a vehicle owner/ operator receiving compensation for the electric power provided by the vehicle, the vehicle owner/ operator and the docking facility or a third party must agree on an account to be compensated for the electric power. Such an account (called here a vehicle account) could be for example a general credit card account, or an account created with the docking facility or a third party especially for receiving compensation for the electric power provided by the vehicle. In any event, the account information could be provided by the vehicle owner/ operator to the docking facility or a third party, possibly offline. Then the docking facility or the third party could communicate the account information to the interface 11c, where it could be stored for use each time the vehicle docks and provides electric power, i.e. so that the interface 11c can then automatically provide the account information to any fixed coupler 13 at the docking facility, or, even at other docking facilities. In some embodiments, the vehicle accounts could be specifically identified with the vehicle, e.g. via the vehicle identification number, and could be sold with the vehicle. The account information would, advantageously, be communicated to and by the interface 11c and stored there so as to be kept secure. For example, it could be communicated in encrypted form based on a public/private key pair, and it could be stored in encrypted form, using any of various encryption technologies.

In case of a business receiving power from a vehicle parked on its premises, the fixed coupler would be provided by the business or perhaps a third party. There could be such a coupler in many or all of the parking spaces. The business (or third party) could then receive solar-derived electric power from many vehicles, and either use it internally, or sell it to the grid (directly or through a broker). The business (or third party) would compensate the vehicle accounts for the electric power received from the respective vehicles, using the account numbers provided to the fixed coupler 13 via the interface 11c of the vehicle, and using the meter readings for the vehicles.

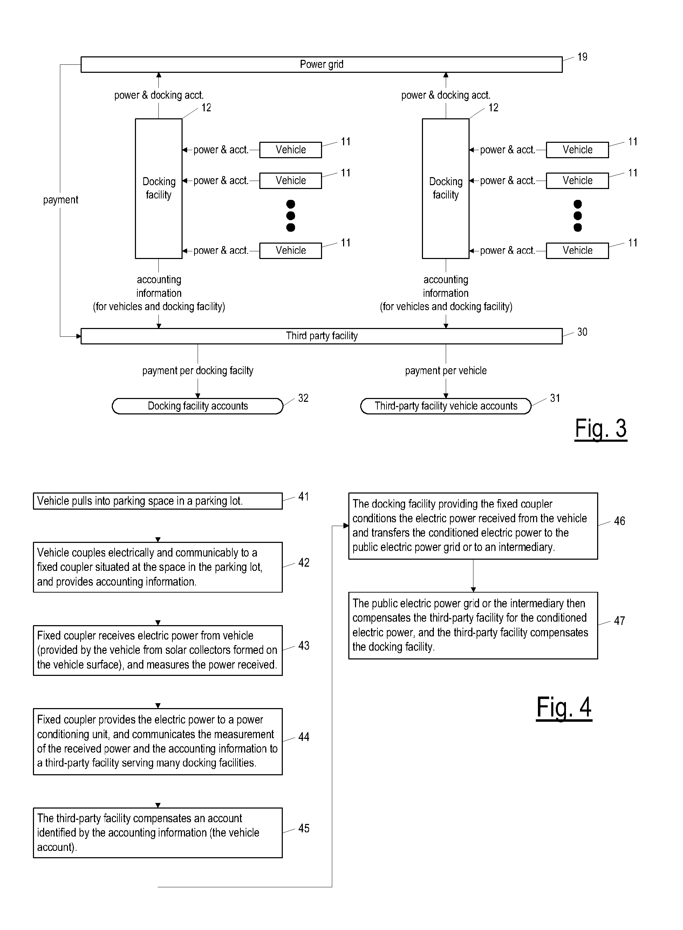

In some embodiments, the home or business providing the docking facility 12 could itself use the electric power received from the vehicle 11 at least some of the time, and could sell the electric power to the grid at other times. For this, the docking facility could include a power router 16. The power router could determine whether power should be provided to the grid (via an interface 18 to the grid), or should instead be made available to a local bus 17 of the home or business (for internal use by the home or business). The power router 19 would in many applications be communicably coupled to the power grid 19 via the interface 18 to the grid for receiving requests to provide electric power to the grid. (The interface 18 also serves for providing the electric power, and often also for receiving electric power from the grid, as needed.) The electric power is usually adapted for use by the power grid by a power conditioning unit 15; the power conditioning unit provides electric power so as to have predetermined characteristics, such as voltage as a function of time, making the power useable by the power grid. The form in which the power is provided by the power conditioning unit 15 is the form useable by the home or business, as well as by the grid. As it is advantageous to have power at the ready for use by the grid, the docking facility will often include an energy storage device 18a (e.g. a battery and AC/DC converter). The interface 18 to the grid would then draw power from the energy storage device 18a on request by the grid. The docking facility would be provided compensation by the grid (or an intermediary, if such is involved, such as a power marketer) based on the total conditioned power provided by the docking facility. For this, of course, in much the same way as the docking facility measures the power received from a vehicle and receives accounting information for use in compensating the vehicle for the power received, the grid (or an intermediary) would measure the power received from the docking facility and would also receive accounting information from the docking facility (perhaps only at the beginning of the business relationship, and then only as changes necessitate) indicating an account--a docking facility account--to be compensated for the power provided by the grid. An embodiment is described in reference to Figure 3 where a third-party compensates such a docking facility account, but the invention of course encompasses also embodiments in which there is no third party.

In case of a home providing the docking facility (either to use the electric power itself, or to sell it to the grid), the fixed coupler 13 could include a cable and a plug at the end of the cable, so that the owner of the vehicle could park the car outside, get the plug, and insert the plug in a receptacle in the vehicle, and thus make possible downloading electric power from the vehicle.

The solar collector 11a includes a solar collector medium and also electrodes. The solar collector medium is, according to a preferred embodiment of the invention, of a type that can be painted or printed (as in ink-jet printing) onto the body of the vehicle, i.e. it is spreadable. The solar collecting medium must of course be placed in physical contact with electrodes. Other advantageous solar collector media include solar cells laminated onto the surface of the vehicle, or otherwise built into the surface of the vehicle.

The preferred solar collecting medium is formed from conducting plastics/ polymers and nano-based particles (e.g. so-called buckyballs, described below) or semiconductor particles, mixed in a solution, which can then be painted/ printed in a process similar to inkjet printing onto the surface of the vehicle. There the nanomaterials or semiconductor particles, in consequence of electrochemical forces, assemble themselves within the plastic into structures serving as the basis of a solar cell, i.e. a solar cell except for the electrodes needed to extract the solar energy as electrical current, what might be called the solar cell body. Such a solar cell body is thus a spreadable medium, in the sense of paint or ink.

As an example, SIEMENS, of Erlangen, Germany, is researching buckyballs (carbon structures in the form of a spheroid, having flat panels joined together to form a sphere, like a soccer ball) and conductive plastic for solar cells and photodetectors, in what can again be described as a photovoltaic film.

As another example, KONARKA TECHNOLOGIES, of Lowell, MA, is developing what can be described as a photovoltaic film, relying on tiny semiconducting particles of titanium dioxide coated with light-absorbing dyes, bathed in an electrolyte, and embedded in plastic film. As another example, NANOSOLAR, of Palo Alto, CA, is testing titanium compounds and conductive plastic that can be sprayed on surfaces to form solar cells. As still another example, NANOSYS, also of Palo Alto, CA, is developing self-orienting nanoparticles in conductive plastic for photovoltaic coatings.

As still another example, STMICROELECTRONICS, of Geneva, Switzerland, is blending buckyballs with carbon-based molecules containing copper atoms to make solar cells. In still another approach encompassed by the invention, GENERAL ELECTRIC, of Schenectady, NY, is currently adapting methods developed for printable lighting panels to make solar cells. Such solar cells could be printed on a suitable medium and laminated for protection against the environment. (Ideally, the medium would be hermetically sealed from the environment.)

The basis for a spreadable solar collector medium, and in particular the Siemens technology, is work done in the early 1990s, when physicists Serdar Sariciftci and Alan Heeger at the University of California, Santa Barbara, created primitive photovoltaic devices by pouring a solution of conducting plastic and buckyballs onto a glass plate, spinning the plate to spread the solution into a film, and sandwiching the film between electrodes. The conducting polymer absorbed photons, providing electrons to the buckyballs where they were routed to an electrode. The film thus functioned as a solar cell.

Nanosolar sprays a mixture of alcohol, surfactants (substances like those used in detergents), and titanium compounds on a metal foil. As the alcohol evaporates, the surfactant molecules attach to each other so as to form elongated tubes. The titanium compounds fuse to the tubes and to each other. A block of titanium oxide bored through with holes just a few nanometers wide is thus formed on the foil. Nanosolar then fills the holes with a conductive polymer, adds electrodes, and covers the whole block with a transparent plastic.

A solar collecting medium formed using semiconductor polymers, such as is done by Konarka, is advantageous because the semiconductor polymers can be dissolved in common solvents and printed link inks. To do so, it is known in the art to interpenetrate electron donating and accepting (semiconductor) polymers at the nanometer length scale so that electrons and holes can be separated from each other and then transported toward electrodes. A polymer solar cell is made by sandwiching a thin film of polymer between two metallic conductors such as indium tin oxide and aluminum. These function as electrodes, and must have different highest occupied energy levels, so that electrons will flow from the conductor with the higher energy electrons to that with the lower energy electrons, from aluminum to indium tin oxide for example, until equilibrium is reached. The charge that builds up on the two electrodes generates an electric field across the semiconductor. When the semiconductor absorbs light the electric field pulls electrons to the positive electrode and holes to the negative electrode; in other words, an electric current results. According to the prior art, a polymer with two kinds of semiconductors is used; with only one kind, the electron kicked out of the valence band into the conduction band of the one semiconductor ultimately just recombines with the hole left behind in the valence band. Of the two kinds of semiconductors typically used, one has a higher energy conduction band than the other. The two kinds are mixed together as domains of one kind, interspersed among domains of the other kind; if the interspersing is sufficient then when an electron-hole combination is produced by absorption of light in the semiconductor having the higher energy conduction band and close enough to a domain of the other kind, the electron transfers to the other kind, and the hole is left behind in the first kind. The hole then travels in the electron-donating semiconductor to the negative electrode, and the electron travels in the accepting semiconductor to the positive electrode. The intermixing of domains of the two kinds of semiconductors must be sufficient so that a substantial portion of the photo-electrons donated by the donating semiconductor accepting semiconductor before combining with holes in the donating semiconductor. The overall thickness of the polymer, at least based on current work, is at least 100nm in order for enough light to be absorbed, and simple recombination/ decay of an electron-hole pair is believed to occur typically within a distance of approximately 6 nm, and so the domains are advantageously smaller than 6 nm in linear dimension.

Referring again to Fig. 1, an electrical connection is necessary for transferring the electric power from the vehicle 11 to the docking facility 12, i.e. to the fixed coupler 13 of the docking facility 12, and the vehicle's interface 11c to the fixed coupler must be electrically (and communicably) connected. The connection can be made manually, e.g. using a plug provided as part of the fixed coupler 13 (which would mate with a receptacle in the vehicle's interface 11 c). Alternatively, the connection is made automatically as the vehicle parks.

Referring now to Figure 1 and also to Figures 2A (giving a top view) and 2B (giving a side view), to enable the vehicle 11 to electrically and communicably couple to the fixed coupler 13 as the vehicle parks, the fixed coupler may include a plug 21 having a plug body 21 a and plug prongs 21 b made of a conductor or semiconductor material suitable for establishing electrical connection upon contact or when placed in proximity to another conductor or semiconductor material. The plug is advantageously special in that the prongs are, in their unforced state, oriented so as to angle slightly upward away from the local horizontal, and slidably attached to the plug body 21 a as indicated in the figure so as to be able to move in three dimensions at their proximal end, where they attach to the plug body, and are also hinged so that their distal ends are able to rotate relative to the plug body with two degrees of freedom (i.e. so as to rotate up and down and also sideways). The plug is resiliently mounted to a structure (not shown) so that when a car pulls up to the plug, if the car drives too far forward toward the plug, the plug will push backward.

Still referring to Figures 1, 2A and 2B, the vehicle, correspondingly, as part of the interface 11c to the fixed coupler, includes a receptacle 22 having a receptacle body 22a and conductor-lined cavities/slots 22b for receiving the prongs of the plug. The receptacle is attached to the front of the vehicle, and the plug is held off the ground in a parking space, and oriented so that as a vehicle pulls into the parking space the prongs of the plug slide and rotate as needed in order to insert into the cavities/ slots in the receptacle, providing electrical contact suitable for receiving electric power from the vehicle and also for receiving communication signals providing an account number associated with the vehicle.

Advantageously, the prongs 21 b may be attached to the plug body 21 a so as to be urged to a neutral position and orientation relative to the plug 21, i.e. the prongs would return to the neutral position and orientation when withdrawn from the receptacle 22. Also advantageously, permanent magnets 21 c embedded in the conducting material of the plug prongs, and permanent magnets 22c embedded in the receptacle may be used to assist in guiding the plug prongs into the receptacle.

The plug and receptacle may make use of conductor material having a high conductivity compared to ordinary copper. For example, the conductor material in the plug and receptacle could be made from material in which are embedded so-called nanotubes, which are nanoscale tubular structures made from carbon (typically on the order of 10 nanometers in diameter), and having ballistic conductivity when provided as e.g. so-called single-wall nanotubes). Using high-conductivity nanoscale conductors would allow a very small and lightweight plug and a correspondingly small and lightweight receptacle.

Another possibility is for the vehicle to use an inverter to create AC power from the DC electric power naturally provided by the solar collectors. The AC electric power could then be provided to the fixed coupler via induction, using a coil in the vehicle where the DC receptacle would otherwise be, and using another coil in the fixed coupler where the DC plug would otherwise be. This would have the advantage of allowing for an (electric) ground for the vehicle different from that for the fixed coupler.

In another alternative, the electrical connection can be made by a simple robot arm equipped with sensors to determine where to plug into a receptacle on the vehicle (part of the vehicle's interface 11 c). To facilitate this, the vehicle's interface could include visual or magnetic indicators for guiding the robot arm. As an alternative, the solar power could be converted from DC to AC in the interface 11 c or in the solar collector 11a, and provided to the fixed coupler 13 by induction (such as e.g. how consumer electronic devices like electric shavers are recharged).

In any embodiment, it would be advantageous to include a sensor in the vehicle, as part of the interface 11 c to the fixed coupler 13, or in the fixed coupler itself, to provide to the vehicle operator an indication of successful docking.

Referring now to Figure 3, an embodiment of the invention is shown in which a third-party facility 30 (operated by some third party, i.e. not necessarily the owner/operator of the premises where the docking facility is located) provides compensation for electric power provided to a plurality of docking facilities 12 by a plurality of vehicles 11, and the docking facilities in turn provide the electric power to the power grid 19. In a typical application, the docking facilities may also provide to the grid (or an intermediary) accounting information indicating an account that is to be compensated, and metering is performed, possibly by equipment owned by the power grid (or an intermediary) but located at the docking facility, or perhaps by equipment that is part of the interface 18 to the grid (Figure 1), which interface is part of the docking facility. The accounting information can include the measurement of the electric power provided to the grid, in case the metering is performed by the docking facility. For the third-party facility to compensate the vehicles, the docking facilities provide to the third-party facility the accounting information needed to do so, i.e. the vehicle account information and the metering information for the vehicle. For the third-party facility to also compensate the docking facilities, as opposed to their being compensated directly by the grid, the docking facilities provide accounting information to the third-party facility including a docking facility account identifier, and perhaps an indication of the electric power provided to the grid by the docking facility. (The metering information may not be needed in some arrangements. The grid may compensate the third-party facility separately for each docking facility, and the third-party facility may then pay a percentage to the docking facility, so that metering information is not needed by the third-party facility.) The third-party facility could, as in indicated in Figure 3, receive payment from the power grid for each docking facility, for the electric power provided to the grid by the docking facility, and could use this to compensate third-party facility vehicle accounts 31 associated with the vehicles initially providing the electric power. (The docking facilities 12 may store in the local docking facility vehicle accounts 14a the information they provide to the third-party until they successfully communicate the information to the third-party facility.) The third-party facility, for services performed, would keep a portion of the payment made by the power grid. If the third party owns and maintains the docking facilities but on properties not owned by the third party, the third party would provide to the owners of the properties a portion of the payment from the power grid or some pre-agreed payment, as a payment per docking facility.

In embodiments in which a third-party facility is used to compensate the vehicle accounts, the third-party facility includes computer equipment communicably coupled to corresponding equipment at the docking facilities, via e.g. the Internet. The computer equipment hosts computer software that performs all accounting needed for compensating the vehicle accounts in respect to electric power provided by vehicles associated with the vehicle accounts, according to the information communicated by the docking facilities. The association of a vehicle with a vehicle account is typically provided by the act of the vehicle communicating the vehicle account when connecting to a docking facility. The compensation calculations and consequent compensating of the vehicle accounts is advantageously a fully automatic process.

In a procedure not relevant to the invention, the vehicle accounts must of course first be established with the docking facility or the third-party facility so as to be associated with the vehicles. Then, in providing the electric power and also the information indicating the vehicle account, a vehicle interface 11c (Figure 1) to the fixed coupler 13 will typically encrypt the vehicle account information. It is envisioned that the vehicle account information is communicated to the fixed coupler using the same medium as the electric power. Thus, e.g. if a plug and receptacle are used, the vehicle account information is provided as a modulated carrier conveyed over the same wiring as the electric power. The fixed coupler would include a filter tuned to the frequency of the carrier in order to be able to extract the vehicle account information from the electric power.

In a particular illustration of the use of the invention, a third-party business places docking facilities at stadium parking lots for accumulating electric power from vehicles parked in the parking lots during sporting events. There are now such parking lots sufficient in size for many vehicles, often over 60.000 vehicles. (There are several college campuses with stadium parking lots able to accommodate over 100.000 vehicles.) Stadium parking lots are admittedly empty except during sporting events, and so such a third-party business might also establish docking facilities according to the invention at other parking lots having a higher usage rate. For example, a docking facility according to the invention could be established at airports, especially at long-term parking facilities for airports. These are almost always filled to near capacity, seven days per week, twenty-four hours per day. John F. Kennedy International Airport (JFK) in New York City, for example, has over 14.000 parking spaces. Examples of other kinds of parking lots where it would almost certainly make economic sense to provide equipment implementing a docking facility include parking lots for shopping malls, strip malls, and super-sized grocery stores/ supermarkets.

Referring now to Figure 4, in a typical application of the invention, in a step 41 a vehicle pulls into a parking space at, e.g., a stadium parking lot. In a next step 42, the vehicle couples electrically and communicably to a fixed coupler situated at the space in the parking lot, and provides accounting information indicating a vehicle account. In case of an embodiment using a plug and receptacle as described above, the coupling is done by steering the vehicle so as to have the plug of the fixed coupler insert into the receptacle in the vehicle. Advantageously, the vehicle operator is given visual clues to align and locate the vehicle relative to the plug. For example, a horizontal column of light-emitting diodes could be used to indicate whether the vehicle receptacle is left or right of the plug, and whether by a lot or a little, and a vertical column could be used to indicate how much more to pull into the parking space to reach the plug. The light emitting diodes would be controlled to turn on or off based on proximity sensors. Of course the invention also encompasses a plug attached to a cable so that the vehicle operator can simply park the vehicle, get out, and insert the plug into the receptacle on the vehicle.

Still referring to Figure 4, in a next step 43 the fixed coupler receives electric power from the vehicle, and meters the power, i.e. measures the total power received. In a next step 44, after the vehicle decouples from the fixed coupler, the fixed coupler provides the electric power to a power conditioning unit, and communicates the measurement of the received power and the accounting information to an accounting module of the third-party facility (either directly, or indirectly via the accounting module 14 of the docking facility, as in Figure 1). Then in a next step 45, the third-party facility compensates an account identified by the accounting information, i.e. the vehicle account). Advantageously, the docking facility and the third-party facility erase all accounting information as soon as it is no longer needed to compensate the vehicle for providing the electric power.

Still referring to Figure 4, in a next step 46, the docking facility conditions the electric power received from the vehicle and transfers the conditioned electric power to the public electric power grid or to an intermediary. In a next step 47, the public electric power grid or the intermediary then compensates the third-party facility for the conditioned electric power, and the third-party facility compensates the docking facility. The power grid facility or intermediary may compensate the docking facility directly of course. At any rate, accounting information regarding the docking facility must be used. For example, as mentioned above, each docking facility could have an account that would be compensated for the conditioned electric power it provides.

It is to be understood that the above-described arrangements are only illustrative of the application of the principles of the present invention. The invention encompasses numerous modifications and alternative arrangements, and the appended claims are intended to cover such modifications and arrangements.

## Claims

1. A method, comprising:
a docking facility fixed on a premises, establishing an electrical connection to a vehicle parked on the premises; and
the docking facility receiving electric power from the vehicle, conditioning the electric power so as to be useable by a public electric power grid, and providing the conditioned electrical power for use by the public electric power grid or for use on the premises.

2. A method as in claim 1, further comprising the docking facility receiving electrical power from a plurality of vehicles parked on the premises, conditioning the electric power, and providing the conditioned electric power for use by the public electric power grid or for use on the premises.

3. A method as in claim 2, further comprising:
the docking facility receiving from each vehicle information indicating a vehicle account associated with the vehicle to which payment is to be made for the electric power provided by the vehicle, and measuring the electric power provided by the vehicle; and
the docking facility or a third party, communicably coupled to the docking facility, providing compensation to the vehicle account in proportion to the electric power provided by the vehicle.

4. A system, comprising a docking facility fixed on a premises, wherein the docking facility comprises:
means for establishing an electrical connection to a vehicle parked on the premises; and
means for receiving electric power from the vehicle, means for conditioning the electric power so as to be useable by a public electric power grid, and means for providing the conditioned electrical power for use by the public electric power grid or for use on the premises.

5. A system as in claim 4, wherein the docking facility is configured to receive electrical power from a plurality of vehicles parked on the premises, to condition the electric power, and to provide the conditioned electric power for use by the public electric power grid or for use on the premises.

6. A system as in claim 5, wherein the docking facility further comprises means for receiving from each vehicle information indicating a vehicle account associated with the vehicle to which payment is to be made for the electric power provided by the vehicle, and means for measuring the electric power provided by the vehicle, and wherein the system further comprises means for providing compensation to the vehicle account in proportion to the electric power provided by the vehicle.

7. A system as in claim 6, wherein the means for providing compensation to the vehicle account in proportion to the electric power provided by the vehicle is provided by the docking facility.

8. A system as in claim 6, wherein the system further comprises a third-party facility, and the third-party facility is communicably coupled to the docking facility for receiving the vehicle account and the measured electric power provided by the vehicle, and comprises the means for providing compensation to the vehicle account in proportion to the electric power provided by the vehicle

9. A system, comprising a docking facility fixed on a premises, wherein the docking facility comprises:
a fixed coupler, for establishing an electrical connection to a vehicle parked on the premises; and
a power conditioning unit, for receiving electric power from the vehicle, for conditioning the electric power so as to be useable by a public electric power grid, and for providing the conditioned electrical power for use by the public electric power grid or for use on the premises.

10. A system as in claim 9, wherein the docking facility comprises a plurality of fixed couplers and so is configured to receive electrical power from a plurality of vehicles parked on the premises, to condition the electric power, and to provide the conditioned electric power for use by the public electric power grid or for use on the premises.

11. A system as in claim 10, wherein each fixed coupler is configured to receive from each vehicle information indicating a vehicle account associated with the vehicle to which payment is to be made for the electric power provided by the vehicle, and to measure the electric power provided by the vehicle, and wherein the system further comprises means for providing compensation to the vehicle account in proportion to the electric power provided by the vehicle.

12. A system as in claim 11, wherein the means for providing compensation to the vehicle account in proportion to the electric power provided by the vehicle is provided by the docking facility.

13. A system as in claim 12, wherein the system further comprises a third-party facility, and the third-party facility is communicably coupled to the docking facility for receiving the vehicle account and the measured electric power provided by the vehicle, and comprises the means for providing compensation to the vehicle account in proportion to the electric power provided by the vehicle.

14. A vehicle suitable for use as transportation, comprising:
a solar collector formed on the surface of a vehicle, for providing electric power; and
an interface, for electrically connecting the vehicle to a fixed coupler situated on a premises, for providing the electric power to the fixed coupler, and also for providing a vehicle account associated with the vehicle and to which payment is to be made for the electric power provided by the vehicle.
